# FASCICULE DE BREVET EUROPEEN

(11) **EP 1 465 725 B1**
(45) Date de publication et mention de la délivrance du brevet: **05.10.2011**
(21) Numéro de dépôt: 03712236.3
(22) Date de dépôt: 14.01.2003
(51) Int. Cl.: B01J 29/06, B01J 37/02, C07C 2/86, C07C 15/08, C07C 45/46

(54) **Procédé de préparation d'un composites zeolithe/SiC, le composite susceptible d'être obtenu et leur utilisation en catalyse**
Herstellungsverfahren von Zeolith/SiC-Verbundmaterialien, die nach diesem Verfahren erhaltenen Verbundmaterialien und deren Verwendung als Katalysator
Preparation of zeolite/SiC composites, composites obtained by the process and the use thereof as a catalyst

(30) Priorité: 17.01.2002 FR 0200541
(43) Date de publication de la demande: 13.10.2004
(73) Titulaire: SICAT, 75008 Paris (FR); Centre National de la Recherche Scientifique (CNRS), 75794 Paris Cedex 16 (FR); Université Louis Pasteur de Strasbourg, F-67000 Strasbourg (FR)
(72) Inventeur: BASSO, Stéphan, F-68420 Eghisheim (FR); TESSONNIER, Jean-Philippe, F-67980 Hangenbieten (FR); PHAM-HUU, Cuong, F-67700 Savernes (FR); LEDOUX, Marc J., F-67000 Strasbourg (FR); WINE, Gauthier, F-67000 Strasbourg (FR)
(74) Mandataire: Gaucherand, Michel
(86) Numéro de dépôt international: PCT/FR2003/000091
(87) Numéro de publication internationale: WO 2003/059509

(56) Documents cités:
- WO-A-98/06495
- N. VAN DER PUIL: "Development and catalytic testing of zeolitic coatings" PHD THESIS DELFT UNIVERSITY OF TECHNOLOGY, DELFT, NL, 13 mai 1997 (1997-05-13), pages 185-207, XP002215344 ISBN: 90-9010583-2 cité dans la demande
- PATENT ABSTRACTS OF JAPAN vol. 018, no. 525 (C-1257), 5 octobre 1994 (1994-10-05) & JP 06 182214 A (MITSUBISHI HEAVY IND LTD;OTHERS: 01), 5 juillet 1994 (1994-07-05) cité dans la demande
- PATENT ABSTRACTS OF JAPAN vol. 1996, no. 07, 31 juillet 1996 (1996-07-31) & JP 08 057305 A (TOKAI CARBON CO LTD), 5 mars 1996 (1996-03-05)
- G. WINÉ , J. P. TESSONNIER , C. PHAM-HUU AND M. J. LEDOUX: "Beta zeolite supported on a macroscopic pre-shaped SiC as a high performance catalyst for liquid-phase benzoylation" CHEMICAL COMMUNICATIONS., no. 20, 21 octobre 2002 (2002-10-21), pages 2418-2419, XP002240593 ROYAL SOCIETY OF CHEMISTRY., GB ISSN: 1359-7345
- SEIJGER G B F ET AL: "In situ synthesis of binderless ZSM-5 zeolitic coatings on ceramic foam supports" MICROPOROUS AND MESOPOROUS MATERIALS, ELSEVIER SCIENCE PUBLISHING, NEW YORK, US, vol. 39, no. 1-2, septembre 2000 (2000-09), pages 195-204, XP004215025 ISSN: 1387-1811 cité dans la demande
- MIKKELSEN O ET AL.: "Use of isotopic labeling for mechanistic studies of the methanol-to-hydrocarbons reaction. Methylation of toluene with methanol over H-ZSM-5, H-mordenite and H-beta" MICROPOROUS AND MESOPOROUS MATERIALS, ELSEVIER SCIENCE PUBLISHING, NEW YORK, US, vol. 40, no. 1-3, novembre 2000 (2000-11), pages 95-113, XP004224987 ISSN: 1387-1811 cité dans la demande
- VAN DER PUIL N ET AL: "Preparation and catalytic testing of zeolite coatings on preshaped alumina supports" MICROPOROUS AND MESOPOROUS MATERIALS, ELSEVIER SCIENCE PUBLISHING, NEW YORK, US, vol. 27, no. 1, janvier 1999 (1999-01), pages 95-106, XP004154509 ISSN: 1387-1811 cité dans la demande
- MARC J LEDOUX AND CUONG PHAM-HUU: "Silicon carbide: a novel catalyst support for heterogeneous catalysis", CATTECH, BALTZER SCIENCE PUBLISHERS, AMSTERDAM, NL, vol. 5, no. 4, 1 January 2001 (2001-01-01) , pages 226-246, XP007917065, ISSN: 1384-6566, DOI: DOI:10.1023/A:1014092930183

## Description

### Domaine technique de l'invention

La présente invention concerne la préparation de composites zéolithe / SiC ainsi que leur utilisation comme catalyseur ou support de catalyseur pour des réactions chimiques en phase gazeuse ou liquide.

### Etat de la technique

Les matériaux présentant une structure de type zéolithique sont utilisés dans un grand nombre de procédés industriels comme catalyseurs, en particulier en pétrochimie. L'article "Zeolithes : Catalysts for Organic Syntheses" de W. Hölderich, M. Hesse et F. Näumann, paru dans Angewandte Chemie Int. Ed. Engl. 27, p. 226 - 246 (1988), contient une longue liste de reactions chimiques susceptibles d'être catalysées par des zéolithes. Le brevet US 5,994,603 (Exxon) montre l'utilisation d'un catalyseur à base de zéolithe pour la méthylation du toluène.

Cependant, la faible taille des cristaux rend leur utilisation directe difficile, dû à des phénomènes de perte de charge dans les réacteurs chimiques. La solution communément adoptée consiste à leur ajouter un liant, le plus souvent de type oxyde de silicium ou oxyde d'aluminium, et à préparer des corps extrudés. Cette méthode présente l'inconvénient que le liant n'est pas chimiquement inerte. De ce fait, des réactions parasites peuvent se produire dans les conditions d'utilisation du catalyseur. Par ailleurs, le liant peut rendre inaccessible une partie de la zéolithe aux réactifs.

Les recherches qui ont été menées pour s'affranchir de ces inconvénients se sont orientées vers la synthèse de matériaux de type zéolithe supportée. L'article « Growth of ZSM-5 films on alumina and other surfaces » par R. Lai et al, paru dans la revue Microporous and Mesoporous Materials vol 37, p. 9 - 19 (2000), décrit la croissance de films de zéolithes de type ZSM-5 à la surface de tubes ou plaques en α-Al₂O₃, zircone et quartz, et leur utilisation pour la séparation de gaz.

D'autres articles traitent plus particulièrement de la synthèse de zéolithes supportés en vue de leur utilisation en catalyse. L'article « Zeolithe coatings and their potential use in catalysis » de J.C. Jansen et al, paru dans la revue Microporous and Mesoporous Materials vol 21, p. 213 - 226 (1998), décrit les différentes méthodes de synthsèe ainsi que les différents substrats (supports) les plus couramment utilisés pour la préparation de composites de type zéolithe supportée : des extrudés ou granulés de α-Al₂O₃ ou γ-Al₂O₃, des monolithes de Si, TiO₂, α-Al₂O₃, des plaques d'acier inoxydable, quartz, carbone pressé, verre, des mousses de α-Al₂O₃, des fibres de carbone, des fibres végétales, des fils d'acier, ou même des matériaux inertes tels que le teflon.

L'utilisation de supports en carbure de silicium pour le dépôt de zéolithes est connue en elle-même. La demande de brevet WO 98/06495 (Technische Universiteit Delft) mentionne le dépôt de zéolithes sur le SiC, sans donner aucune autre précision. L'article « Preparation and catalytic testing of zeolite coatings on preshaped alumina supports de N. van der Puil et al., paru dans la revue Microporous and Mesoporous Materials vol. 27, p. 95 - 106 (1999), décrit la synthèse de zéolithes de type structural MFI (ZSM-5, Silicalite-1) ou BEA (Bêta) supporté sur des granules et extrudés de α-Al₂O₃. On connaît aussi l'utilisation de SiC et de SiC / Al₂O₃ comme support pour la synthèse de tels composites.

Le dépôt de zéolithes sur des céramiques poreuses est décrit dans l'article de G.B.F. Seiger et al., « In situ synthesis of binderless ZSM-5 zeolithic coatings on ceramic foam supports », paru dans la revue Microporous and Mesoporous Materials, vol. 39, p. 195-204 (2000). La mise en forme de ces matériaux est cependant difficile, et ces matériaux sont fragiles et coûteux. La thèse de doctorat « Development and catalytic testing of zeolitic coatings » de N. van der Puil, soutenue le 13 mai 1997 à la Delft University of Technology, Delft, Pays-Bas, décrit la synthèse de zéolithe bêta supportée sur granulés et extrudés de α-Al₂O₃ et sur des grains de SiC. La demande de brevet JP 06182214 A mentionne l'utilisation de composites zéolithe / SiC comme support de catalyseur de combustion.

La plupart des supports utilisés jusqu'à présent, tels que la silice (verre, quartz) ou l'alumine densifiée, ont plusieurs autres inconvénients : ils ne sont pas chimiquement inertes et réagissent notamment avec le milieu de synthèse de la zéolithe en s'y dissolvant partiellement de telle sorte que la composition initiale du gel de synthèse s'en trouve altérée. D'autre part, ces supports présentent une surface spécifique très faible, typiquement de l'ordre de 0,1 à 5 m²/g, de telle sorte que la quantité de zéolithe ne dépasse que rarement 10 % en masse du composite. Enfin, l'inconvénient le plus important des supports tels que la silice ou l'alumine est que la zéolithe y adhère mal et se décolle facilement en formant une poudre. Ces inconvénients sont gênants pour l'utilisation des zéolithes supportées notamment en industrie chimique, car ils conduisent à une baisse de la durée de vie du catalyseur et à une baisse du rendement et de la sélectivité de la réaction visée par perte directe de la phase active qui peut être entrainée par le gaz ou par le liquide à traiter. De plus, lorsque la zéolithe supportée s'est au moins partiellement désagrégée, le support peut se trouver exposé au milieu réactionnel, et il peut alors catalyser des réactions parasites.

Ce problème de la mauvaise adhérence ne semble pas avoir trouvé une solution satisfaisante. Certains documents (voir l'article G.B.F. Seijger et al., la thèse de doctorat de N. -van der Puil, la demande de brevet JP 06182214 A et la demande de brevet WO 98/06495, précédemment cités) font état de l'utilisation de supports chimiquement inertes, et plus particulièrement de SiC. Cependant, dans chaque cas, il s'agit de α-SiC, souvent dénommé « SiC non poreux ». Comme le rapporte N. van der Puil dans sa thèse de doctorat, la force de l'ancrage des cristaux de zéolite à la surface du support est très faible et une partie de la zéolithe se détache lors des traitements post-synthèse, effectués pour obtenir le composite sous sa forme définitive. Pour y remédier, plusieurs solutions ont été proposées.

Seijger et al (voir l'article précédemment cité) parviennent à déposer une charge importe de zéolithe sur une mousse de céramique de SiC / Al₂O₃. Cependant, le support est fragilisé lors de la synthèse et le composite ainsi synthétisé est cassant.

La demande de brevet JP 06182214 A évoque une autre méthode consistant à calciner le SiC à haute température afin de former une couche de SiO₂ à sa surface. Consécutivement, la mise en présence du support ainsi préparé avec une solution aqueuse contenant une source d'aluminium, en conditions hydrothermales, permet de transformer cette couche de silice en zéolithe. Ce composite est ensuite utilisé en tant que support de catalyseur pour effectuer des réactions de combustion. Bien que cette méthode conduise à une forte interaction entre la zéolithe et le support, la charge en zéolithe reste faible puisque seule la couche superficielle, constituée de SiO₂, peut être transformée.

La demande de brevet WO 98/06495 présente une autre méthode de préparation du support qui consiste à le mettre en présence d'une solution contenant un structurant de même nature que celui utilisé pour préparer le gel de synthèse de la zéolithe. Consécutivement à cette préparation, le support est mis en présence du gel de synthèse en conditions hydrothermales. Cette méthode permet d'obtenir un bon ancrage de la zéolithe sur un support de α-Al₂O₃.

Dans chaque cas où le SiC a été étudié comme support pour réaliser un composite de type zéolithe / SiC, seul le α-SiC, non poreux et donc à faible surface spécifique (< 5 m²/g), a été utilisé. Il a été montré par l'homme du métier (voir documents précédemment cités) que soit les zéolithes présentent un faible ancrage à la surface du SiC, soit les conditions de synthèse rendent le composite final fragile, soit la synthèse conduit seulement à une très fine couche de zéolithe sur son support, de telle sorte que le rendement reste faible. Ces différents inconvénients font, qu'aujourd'hui, l'homme du métier a abandonné l'utilisation du SiC au profit de l'α-Al₂O₃ pour la synthèse de tels composites.

G. WINÉ et al., CHEMICAL COMMUNICATIONS., no. 20, 21 octobre 2002 (2002-10-21), pages 2418-2419, décrit un procédé de préparation d'un composite formé d'une zéolithe Beta déposée sur un support en beta-SiC préparé par synthèse SMS et son utilisation pour l'acylation de Friedel-Crafts.

Le problème que la demanderesse a cherché à résoudre par la présente invention est de proposer un matériau composite comportant une zéolithe et un support rigide, qui évite les inconvénients des produits existants. Plus particulièrement, il est souhaitable que le support possède notamment une bonne tenue mécanique dans les conditions d'utilisation du composite comme catalyseur, permette une mise en forme aisée, ait une bonne résistance chimique, notamment en milieu basique (pour permettre la synthèse des zéolithes par voie hydrothermale), et montre une faible activité catalytique dans les conditions d'utilisation du composite comme catalyseur (pour éviter des réactions parasites). Il est également souhaitable que le support montre une bonne adhérence pour la zéolithe. Par ailleurs, il est souhaitable que le support présente un surface spécifique supérieure à 5 m²/g afin de permettre le dépôt d'une quantité importante de zéolithe. La surface spécifique d'un catalyseur étant un paramètre important en catalyse, en particulier pour des réactions catalytiques en phase gaz, il est souhaitable que le composite soit entièrement recouvert de zéolithe, même dans les pores du support, de manière homogène, sans former une couche épaisse, de telle sorte que les réactifs puissent accéder à la totalité de ladite zéolithe lors de l'utilisation du composite dans des réactions catalytiques. Finalement, le support doit présenter une forte interaction avec la zéolithe, afin que celle-ci ne se détache pas dudit support lors des opérations de traitement post-synthèse et lors de l'utilisation du composite comme catalyseur.

### Objet de l'invention

Un premier objet de la présente invention est un procédé de préparation d'un composite formé d'une zéolithe selon les revendications 1 à 6, et un composite susceptible d'être obtenu par ce procédé. De façon préférentielle, le support est une mousse de β-SiC avec une surface spécifique comprise entre 10 et 400 m²/g. La zéolithe est avantageusement sélectionnée parmi la zéolithe ZSM-5, la zéolithe-β et la silicalite.

Un deuxième objet de la présente invention est l'utilisation d'un composite susceptible d'être obtenu par le procédé selon une quelconque des revendications 1 à 6 comme catalyseur ou support de catalyseur pour des réactions chimiques en milieu gazeux ou liquide.

### Description des figures

La figure 1 montre les pics de diffraction correspondants à la zéolithe ZSM-5 dans un composite selon l'invention, ainsi que dans un support nu d'extrudés de β-SiC.
La figure 2 compare l'évolution des surfaces spécifiques totale et microporeuse en fonction de l'exposition du composite aux ultrasons (sonication) pour un échantillon selon l'état de la technique et un échantillon selon l'invention :
   (a) Composite ZSM-5 sur extrudés de βSiC
   (b) Composite ZSM-5 sur extrudés d'alumine α.
   Barres noires : surface spécifique microporeuse.
   Barres blanches : surface spécifique totale.
La figure 3 montre deux images de microscopie électronique à balayage (MEB) à grandissement différent (image (a) : grandissement environ 20 ; image (b) : grandissement environ 2000) d'un composite selon l'invention (ZSM-5/β-SiC).
La figure 4 montre deux images de MEB à grandissement différent (image (a) : gra,dissement environ 50 ; image (b) : grandissement environ 1200, l'insert présente un zoom de grandissement 10 000 de la paroi interne de l'extrudé de β-SiC) de coupes d'un composite selon l'invention (ZSM-5/β-SiC).
La figure 5 montre les surfaces spécifiques totale et microporeuse d'un composite ZSM-5 sur β-SiC selon l'invention en fonction du nombre de synthèses successives de ZSM-5.
   Barres noires : Surface spécifique microporeuse.
   Barres blanches : surface spécifique totale.
La figure 6 montre pour chaque étape de synthèse de ZSM-5 sur grain de SiC selon l'invention deux images de microscopie électronique à balayage à grandissement différent: après une (images A), deux (images B) et trois (images B) synthèses successives de ZSM-5 à faible (images A-a, B-a, C-a) et moyen (images A-b, B-b, C-b) grandissement.
La figure 7 montre le spectre RMN ²⁷Al des grains de SiC après une, deux et trois étapes de synthèse successives de ZSM-5.
La figure 8 montre le taux de conversion du toluène (a), le taux de sélectivité en para-xylène de la méthylation du toluène à l'intérieur des produits de réaction (b), et le taux de sélectivité en para-xylène à l'intérieur de la coupe de xylènes (c) en fonction du temps sous flux pour les différents composites ZSM-5 / SiC selon l'invention. La réaction est effectuée à 375°C sur 500 mg de catalyseur.
La figure 9 montre la conversion relative en anhydride acétique et la sélectivité en para-méthoxyacétophénone en fonction du temps pour la réaction catalytique d'acétylation de l'anisole effectuée sur le composite Bêta / SiC selon l'invention.

### Description de l'invention

La demanderesse a trouvé que l'utilisation d'un support en carbure de silicium de structure β (β-SiC) permet de s'affranchir des inconvénients de l'art antérieur. De façon surprenante, la demanderesse a constaté que les matériaux présentant une structure zéolithique montrent une excellente adhérence sur un support en carbure de silicium de structure β. Dans le cadre de la présente invention, il est souhaitable de disposer d'un support caractérisé par une surface spécifique BET plus importante que les support traditionnels (silice, alumine) qui ont une surface spécifique de l'ordre de 0.1 à 5 m²/g. Le carbure de silicium peut être choisi parmi différents matériaux à base de SiC. Le support en carbure de silicium a une surface spécifique BET supérieure à 5 m²/g, mais on préfère des supports avec une surface spécifique comprise entre 5 et 600 m²/g, préférentiellement comprise entre 10 et 600 m²/g, plus préférentiellement comprise entre 10 et 400 m²/g, encore plus préférentiellement comprise entre même 20 et 400 m²/g, et le plus préférentiellement comprise entre 20 et 200 m²/g.

Dans le cadre de la présente invention, le support préféré est un support en β-SiC avec une surface spécifique de l'ordre de 10 à 100 m²/g. Dans des variantes préférées de l'invention, la demanderesse a utilisé des mousses de SiC ou des grains ou extrudés de SiC. De tels matériaux peuvent être préparés par exemple selon les méthodes de synthèse décrites dans les brevets suivants : EP 0 313 480, EP 0 440 569, US 5,217,930, EP 0 511 919, EP 0 543 751 et EP 0 543 752. Selon ces méthodes, on peut synthétiser des matériaux de tailles et formes variées, c'est à dire par exemple sous forme de bâtonnets, de monolithes, d'extrudés, de grains ou de tubes. Ces types et formes de β-SiC donnent de bons résultats, mais d'autres tailles et formes de SiC peuvent également être utilisées dans le cadre de la présente invention.

Toutes les valeurs de surface spécifique ont été déterminées par adsorption d'azote à la température de l'azote liquide selon la méthode BET, connue de l'homme du métier.

Les composites selon l'invention peuvent comporter tout matériau présentant une structure de type zéolithique. Les zéolithes sont des matériaux présentant une structure tridimensionnelle dont la charpente est constituée d'un enchaînement de tétraèdres TO₄, où T représente un atome de silicium ou, de manière optionnelle, d'aluminium. Bien que le terme « zéolithe » ne soit couramment utilisé que dans le cas d'aluminosilicates, il est connu de l'homme du métier qu'une partie ou la totalité des atomes de silicium et d'aluminium peuvent être remplacés par d'autres éléments. Par exemple, le silicium peut être remplacé par d'autres éléments tétravalents comme par exemple, mais sans s'y limiter, l'étain, le germanium, le phosphore ou par un mélange de ceux-ci, et l'aluminium peut être remplacé par d'autres éléments trivalents comme par exemple, mais sans s'y limiter, le bore, le titane, le gallium, l'indium ou par un mélange de ceux-ci. Par conséquent, la demanderesse utilise dans le cadre du présent brevet les termes « zéolithe », « zéolithes », « matériau zéolithique » pour définir tout matériau présentant une structure de type zéolithique et connu par l'homme du métier, sans se limiter aux matériaux ne comportant que du silicium et de l'aluminium. Cela inclut, sans s'y limiter, les aluminosilicates, les metallosilicates (comme par exemple, mais sans s'y limiter, les gallosilicates, les chromosilicates, les borosilicates, les ferrisilicates, les titanosilicates), les silicoaluminophosphates (SAPO), les metalloaluminophosphates (MeAPO), les aluminophosphates (ALPO) et les metallophosphates. La demanderesse utilise dans le présent document le terme « zéolithe aluminosilicique » pour se référer aux zéolithes ne comportant que du silicium et de l'aluminium comme atomes de charpente.

De manière encore plus préférentielle mais sans s'y limiter, les composites zéolithe / SiC peuvent comporter des zéolithes de type structural AEL, BEA, CHA, CLO, ERI, EUO, FAU, FER, HEU, LTA, LTL, MAZ, MEI, MEL, MFI, MOR, MTT, MTW, MWW, OFF, PHI, SOD, TON, ou un mélange de zéolithes de ces différents types structuraux. Ces zéolithes sont décrites dans « Atlas Of Zeolite Structure Types », de W.M Meier et D.H. Olson, Butterworth-Heinemann, 3^{e} édition, 1992. Cet ouvrage nécessairement connu de l'homme du métier défini également la nomenclature normalisée des zéolithes.

La demanderesse préfère la zéolithe ZSM-5, qui est utilisée industriellement comme catalyseur d'isomérisation et comme additif pour le cracking, la zéolite-β et la silicalite. La zéolithe est déposée par voie hydrothermale selon les techniques connues de l'homme du métier.

Dans un mode de préparation avantageux, on calcine le support en β-SiC à 900°C pendant environ 2 heures afin de transformer la couche superficielle (typiquement 3 nm) d'oxyde et d'oxycarbure du support en silice. Cette couche superficielle de silice a une épaisseur comprise entre 1 nm et 10 nm. La demanderesse a constaté que dans ce mode de préparation, la couche externe ainsi formée n'est pas transformée en zéolithe comme c'est le cas dans le brevet JP 06182214 cité précédemment, mais joue le rôle de point d'ancrage pour celle-ci. Si la couche de silice est trop mince, l'ancrage de la couche de zéolithe devient moins bon. Si la couche de silice est trop épaisse, elle se dissout partiellement dans le milieu de synthèse de la zéolithe. L'épaisseur de cette couche peut être déterminée par XPS (X-Ray Photoelectron Spectroscopy). Une zone d'épaisseur particulièrement avantageuse pour la couche de silice se situe entre 1,5 nm et 5 nm.

La synthèse du composite est effectuée *in situ* en présence du support prétraité. Ainsi, la synthèse dudit composite consiste à préparer un gel de synthèse dont la composition et la méthode de préparation est connue de l'homme du métier. Après une période de mûrissement, le support est ajouté au gel et le mélange est transvasé dans un récipient adapté aux synthèses par voie hydrothermale, par exemple un autoclave chemisé en Téflon. La synthèse hydrothermale est ensuite réalisée dans des conditions connues de l'homme du métier. La récupération du composite ainsi que les éventuels traitements post-synthèse sont effectués suivant des méthodes connues.

L'application industrielle des composites selon l'invention se situe en particulier dans le domaine de la chimie et de la pétrochimie. Les composites selon l'invention peuvent être avantageusement utilisés comme catalyseur de réactions chimiques en phase gazeuse ou liquide. Ils peuvent également être utilisés comme support de catalyseur, c'est-à-dire que l'on applique sur lesdits composites une phase active (par exemple un composé métallique qui est éventuellement réduit), pour former un catalyseur de réactions chimiques en phase gazeuse ou liquide. A titre d'exemple, les composites selon l'invention peuvent être utilisés comme catalyseur ou support de catalyseur dans les réactions de craquage, d'acylation, d'alkylation ou isomérisation des hydrocarbures.

Parmi les réactions susceptibles d'être catalysées par lesdits composites, on peut mentionner celles qui sont catalysées par les zéolithes connues. A titre d'exemple, il est connu que la zéolithe H-ZSM-5(SC), un produit disponible dans le commerce, catalyse la synthèse de xylène à partir de toluène et méthanol (voir l'article « Use of isotropic labeling for mechanistic studies of the methanol-to-hydrocarbons reaction. Methylation of toluene with méthanol over H-ZSM-5, H-mordenite and H-beta » par Ø. Mikkelsen et al, paru dans la revue Microporous and Mesoporous Materials, vol 40, p. 95 - 113 (2000)), mais sans aucune sélectivité pour l'isomère para-xylène : la distribution para / méta / ortho est 39% / 38% / 23%.

La demanderesse a constaté que les composites selon l'invention peuvent catalyser cette réaction avec une bonne sélectivité en faveur du para-xylène. Parmi les trois isomères para-, ortho- et meta-xylène, c'est le para-xylène qui est le produit plus intéressant car il peut être transformé par oxydation en acide téréphthalique, un composé utilisé dans la fabrication de fibres et films de polyester. Avec les composites selon l'invention, on peut obtenir une sélectivité du para-xylène par rapport à la totalité des xylènes supérieure à 60 %. La stabilité des composites selon l'invention est au moins comparable à celle des zéolithes connues.

Une autre application des composites selon l'invention se situe dans le domaine de la chimie fine. La réaction de Friedel-Crafts (qui peut être effectuée sous forme d'alkylation ou d'acylation) par exemple, est souvent mise en oeuvre dans des procédés de l'industrie de la parfumerie et dans celle de la pharmaceutique. Cette réaction permet par exemple la synthèse de cétones aromatiques, intermédiaires très importants dans la synthèse de médicaments. Les catalyseurs couramment employés industriellement sont des halogénures de métaux, comme FeBr₃, AlCl₃ ou SbCl₅. Outre les problèmes environnementaux que leur emploi génère, ces catalyseurs ont de plus une faible sélectivité et une courte durée de vie. C'est pour ces différents inconvénients qu'ils sont progressivement remplacés par des catalyseurs acides solides, et plus précisément par des zéolites. Bien que celles-ci résolvent la plupart de ces problèmes, leur durée de vie reste encore limitée, due essentiellement à une extraction de l'aluminium de la charpente aluminosilicatée par des produits formés durant la réaction. La demanderesse a constaté que les composites selon l'invention présentent une meilleure sélectivité que les catalyseurs actuels et une bonne stabilité au cours du temps. D'autre part, la demanderesse a montré que le catalyseur pouvait être réutilisé après un cycle de nettoyage et que son activité catalytique était totalement conservée.

La demanderesse a utilisé le composite selon l'invention comme catalyseur ou support de catalyseur pour l'alkylation et acylation de Friedel-Crafts. A titre d'exemple, la demanderesse a utilisé le composite selon l'invention pour la synthèse de para-alkoxyacétophénone par réaction de Friedel-Crafts. La sélectivité de l'isomère para dépasse 90 % et même 95 %. A titre d'exemple, elle a obtenu du para-méthoxyacétophénone à partir d'anisole et d'anhydride acétique avec une sélectivité supérieur à 99 %. Un autre exemple est la synthèse de p-méthoxybenzophénoné par acylation de Friedel-Crafts.

Une autre application des composites selon l'invention est la purification ou dépollution de gaz d'échappements de moteurs de combustion, est plus particulièrement l'oxydation du monoxyde de carbone en dioxyde de carbone, ainsi que la réduction des oxydes d'azote en azote.

Les exemples qui suivent illustrent différents modes d'exécution de l'invention et montrent ses avantages ; ils ne limitent pas la présente invention.

### Exemples

### Exemple 1 : Préparation et caractérisation d'un composite zéolithe ZSM-5 / SiC

Un composite comportant une zéolithe de type ZSM-5 (type structural MFI) est synthétisée par voie hydrothermale à partir d'un gel qui contient les espèces réactives, selon une méthode similaire à celle décrite dans l'article « Préparation and catalytic testing of zeolite coatings on preshaped alumina supports » par N. van der Puil et al dans la revue Microporous and Mesoporous Materials, vol 27, p. 95 - 106 (1999). Ledit gel est composé d'eau, de tétraéthoxysilane (Si(OC₂H₅)₄ , abrégé TEOS), de nitrate d'aluminium nonahydraté (Al(NO₃)₃. 9 H₂O) et d'hydroxyde de tétrapropylammonium (N(C₃H₇)₄⁺.OH⁻) (abrégé TPAOH). Sa composition molaire équivalent en oxyde est la suivante :
6,6 SiO₂ : 0,100 Al₂O₃ : 1 TPA₂O : 800 H₂O

Le protocole opératoire initial est le suivant : 24 g d'eau, 7,5 g d'hydroxyde de tétrapropylammonium et 5,16 g de tétraéthoxysilane sont placés dans un flacon en polypropylène et mis sous agitation magnétique. Dans un autre flacon, 0,28 g de nitrate d'aluminium nonahydraté est dissout dans 24 g d'eau distillée. La source d'aluminium est ensuite ajoutée au premier flacon. Le mûrissement du gel est effectué sous agitation pendant 50 minutes, au bout desquelles le support (selon le cas, 1 g d'extrudés ou 3 g de grains de taille comprise entre 250 et 425 µm, préalablement calcinés à 900°C pendant 2 heures) est ajouté. Après 10 minutes de mûrissement supplémentaires, le mélange est transvasé dans un autoclave chemisé en Téflon. Celui-ci est ensuite placé dans l'étuve à 150°C pendant 7 heures. Après 7 heures de cristallisation sous pression autogène, l'autoclave est refroidi et le matériau est filtré, lavé abondamment à l'eau distillée et séché à l'étuve à 100°C pendant plusieurs heures. Le solide obtenu est calciné sous air à 550°C pendant 10 heures afin de décomposer le structurant organique. Le composite est mis en présence d'une solution de NH₄Cl à 1M et le mélange est porté à reflux pendant 16 heures suivant une technique connue afin d'obtenir la forme ammonium de la zéolithe. Le composite est ensuite lavé abondamment à l'eau distillée, séché et calciné à 550 °C pendant 10 heures afin d'obtenir la forme acide de la zéolithe et la forme définitive du composite.

La synthèse a été effectuée sur des supports de type nature différent : α-Al₂O₃ et extrudés de β-SiC. Les surfaces spécifiques totale et microporeuse initiales sont respectivement de 22,86 m²/g et 0,00 m²/g dans le cas des extrudés de SiC, et 4,94 m²/g et 0,62 m²/g pour les extrudés d'alumine.

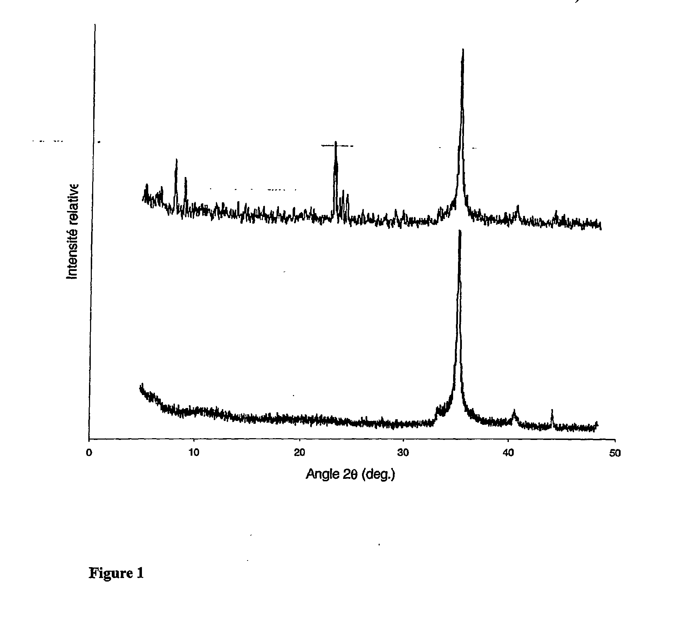

Des diagrammes de diffraction X (figure 1) ont été réalisés sur des poudres de composites ZSM-5 / SiC à l'aide d'un diffractomètre Siemens D5000 utilisant la radiation Cu K_{α} non monochromatique. L'indexation des pics a été réalisée à l'aide de la banque de données du JCPDS (Joint Committee of Powder Diffraction Standards). Le diagramme comporte exclusivement des pics correspondants au substrat β-SIC et à la zéolithe ZSM-5.

La formation de ZSM-5 sur la surface du support est également confirmée par l'apparition de micropores lors de la mesure des surfaces specifiques et des volumes poreux par adsorption d'azote à la température de l'azote liquide selon la méthode BET (voir l'article « Surface area and pore texture of catalysis » de G. Leofanti et al, paru dans la revue Catalysis Today, vol 41, p. 207 - 219 (1998)). Le tableau 1 présente les valeurs obtenues avant et après synthèse pour les extrudés et les grains de SiC :

**Tableau 1 :**

| Surface spécifique déterminée par adsorption d'azote à la température de l'azote liquide selon la méthode BET | | |
|---|---|---|
| Echantillon | Surface spécifique [m²/g] | |
| | Totale | micropores |
| Extrudés de SiC | 22,86 | 0,00 |
| Composite ZSM-5 sur extrudes de SiC | 28,82 | 3,59 |
| Grains de SiC | 18,67 | 0,00 |
| Composite ZSM-5 sur Grains de SiC | 50,99 | 20,97 |

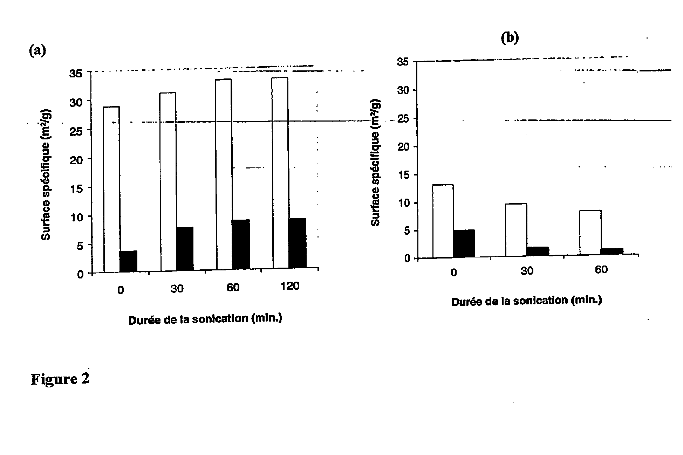

Afin de simuler l'attrition que subissent les catalyseurs industriels dans les réacteurs et qui affecte la durée de vie du catalyseur les composites ont été soumis aux ultrasons pendant des durées variables (voir l'article cité de N. van de Puil). Cet essai permet de caractériser la force d'adhésion entre le support et la zéolithe. Après une certaine durée de traitement aux ultrasons, on a mesuré la surface spécifique par adsorption d'azote qui permet de constater s'il y a perte ou non d'une partie de la zéolithe déposée. Les résultats sont montrés sur la figure 2. On ne constate aucune perte de surface spécifique sur le composite ZSM-5/SiC selon l'invention. Ceci veut dire que l'interaction entre le support et la zéolithe est forte. Cette interaction est vraisemblablement due au fait que le SiC présente à sa surface une couche d'oxyde qui sert de point d'ancrage pour la zéolithe sur le support. La faible augmentation de la surface spécifique est attribuée à un reste de gel de synthèse qui bouchait certains pores et que l'utilisation d'ultrasons a permis d'éliminer.

Dans le cas de la ZSM-5 sur extrudés d'alumine selon l'état de la technique, on constate que le matériau composite formé ne résiste pas à la sonication, puisqu'au bout de 60 minutes la quasi totalité de la zéolithe a disparu. Cela correspond aux observations rapportées dans l'article cité de de van der Puil et collaborateurs dans le cas de synthèses de ZSM-5 sur différents supports en alumine. Par ailleurs, on constate que sur les extrudés d'alumine selon l'état de la technique, on dépose, dans des conditions similaires, moins de zéolithe à la surface des extrudés. Bien qu'il s'agisse d'alumine densifiée, il est probable qu'une partie se dissolve dans le gel de synthèse, modifiant ainsi le rapport d'alumine. Or il est connu (voir l'article cité de R. Lai et al.) que l'augmentation de la quantité d'aluminium affecte voire empêche la cristallisation.

Cette comparaison met clairement en évidence les avantages en terme de résistance mécanique qu'offre le carbure de silicium dans la synthèse des composites à base de zéolithe supportée.

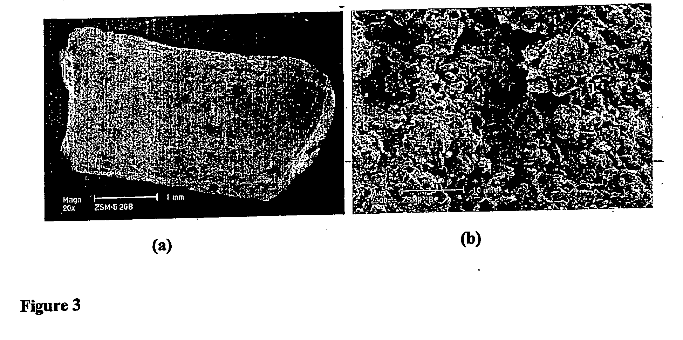

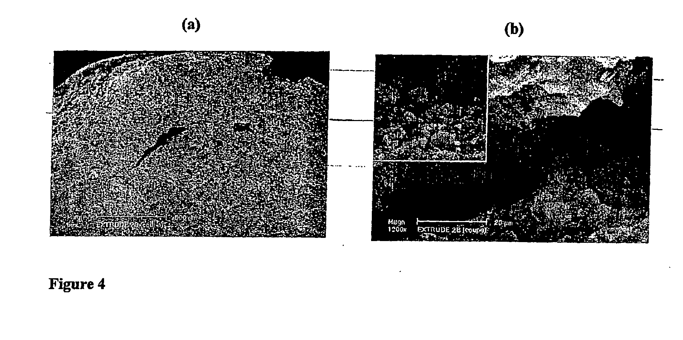

La morphologie du support après synthèse ainsi que la taille des cristaux ont été observées par microscopie électronique à balayage (MEB). Les images MEB (voir figure 3) montrent que la morphologie de l'extrudé n'a pas été affectée par la synthèse. Bien qu'aucune différence avec les extrudés de départ ne soit visible à première vue, on observe en augmentant le grandissement que toute la surface du support est recouverte de cristaux de zéolithe. On distingue deux types de cristaux, selon leur taille : des cristaux hexagonaux de taille 2 µm x 1 µm x 0,5 µm, et des nanocristaux d'un diamètre d'environ 20 nm. Les images MEB à différents grandissements d'une coupe d'un extrudé dudit composite (voir figure 4) montre clairement que la zéolithe a été déposée sur toute la surface du β-SiC, même à l'intérieur des pores. Cela illustre très nettement l'avantage d'un support en β-SiC au lieu du α-SiC : à quantité équivalente de zéolithe déposée, celle-ci se répartit sur une surface plus importante du support et donc forme une couche moins épaisse que dans le cas du α-SiC. Il en résulte que lors de l'utilisation du composite selon l'invention comme catalyseur ou support de catalyseur, toute la zéolithe est facilement accessible par les réactifs.

### Exemple 2 : Dépôt successif de plusieurs couches de ZSM-5 sur SiC

Afin de suivre l'évolution de la quantité de zéolithe déposée, ainsi que la dispersion des cristaux sur la surface du support, on a effectué plusieurs synthèses successives sur un même support constitué de grains de β-SiC de taille 250 - 425 µm, préalablement calciné à 900 °C pendant 2 heures. Le carbure de silicium était le même que celui utilisé dans l'exemple 1.

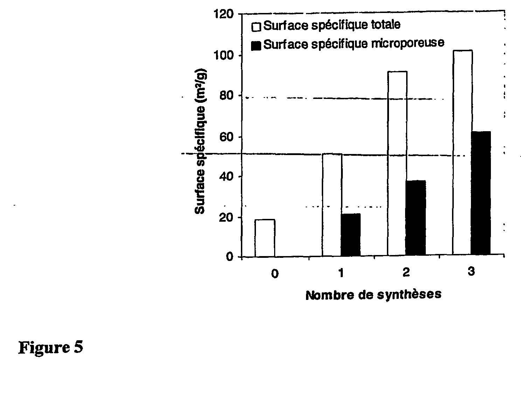

La figure 5 présente l'évolution des surfaces spécifiques totale et microporeuse en fonction du nombre de synthèses successives. On constate que les surfaces spécifiques tant totale que microporeuse augmentent de façon quasi linéaire.

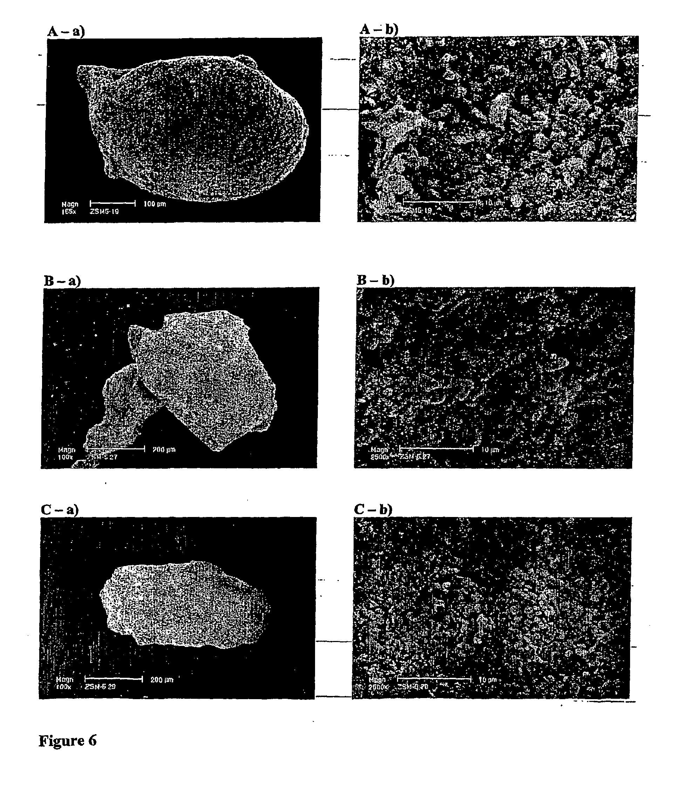

Les images de microscopie électronique à balayage (MEB) des composites ZSM-5/SiC obtenus (voir figure 6) montrent que la surface du support est homogènement recouverte par des cristaux de zéolithe de différentes tailles allant de quelques dizaines de nanomètres à quelques micromètres. Les images à moyen grandissement montrent que la quantité de cristaux déposés augmente avec le nombre de synthèses, conformément aux mesures de surfaces spécifiques. Cependant, elles montrent également que la quantité de nanocristaux a tendance à diminuer au profit des microcristaux de ZSM-5. L'hypothèse la plus probable est que les nanocristaux jouent le rôle de germes, favorisant ainsi l'étape de croissance cristalline lors des synthèses suivantes.

Chaque échantillon a également été analysé par résonance magnétique nucléaire (RMN) avec rotation à l'angle magique (magic angle spinning, RMN-MAS) pour les noyaux ²⁷Al et ¹³C. Les spectres RMN ²⁷Al permettent de distinguer l'aluminium de la charpente de l'aluminium extra-réseau. Le premier, de coordinence tétraédrique, présente un déplacement chimique de 50 à 60 ppm alors que le second, de coordinence octaédrique, présente, lui, un déplacement chimique de 0 ppm (voir l'article de C.J.H. Jacobsen et al, « Zeolites by confined space synthesis - characterization of the acid sites in nanosized ZSM-5 by ammonia desorption and 27Al/29Si-MAS NMR Spectroscopy » paru dans la revue Microporous and Mesoporous Materials, vol 39, p. 393-401 (2000)).

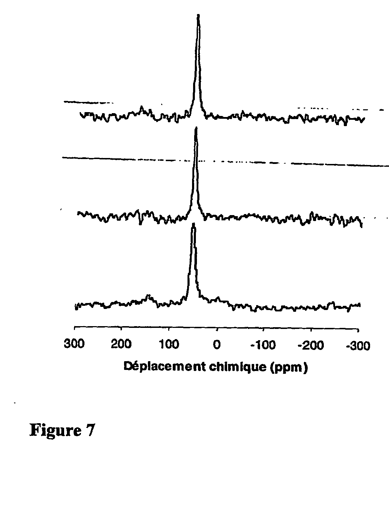

Pour chaque échantillon, on n'observe qu'un pic correspondant à l'aluminium engagé dans la structure zéolithique (voir figure 7). Ces spectres apportent donc la preuve que les petits agrégats observés au MEB sont bien des nanocristaux de zéolithe et non une autre phase.

Les spectres RMN ¹³C sont réalisés pour chacun des trois échantillons afin de quantifier la ZSM-5 déposée. Il est connu qu'il y a exactement deux molécules de structurant par maille de zéolithe. Par conséquent, si on intègre les pics de chaque spectre et qu'on en compare les aires avec celle d'un échantillon de référence de masse de zéolithe connue, on peut déterminer la masse de ZSM-5 de l'échantillon considéré. Connaissant sa masse totale, on peut donc déterminer le pourcentage massique de ZSM-5 pour cet échantillon. La connaissance du pourcentage massique de ZSM-5 est nécessaire pour pouvoir ramener les résultats des tests catalytique (voir Exemple 3) à une masse de zéolithe et ainsi pouvoir comparer les différents catalyseurs entre eux.

### Exemple 3 : Test de l'activité catalytique du composite ZSM-5 / SiC

La réaction de méthylation du toluène, pour laquelle la ZSM-5 est utilisée industriellement, a été mise en oeuvre pour caractériser l'activité catalytique des composites ZSM-5 sur grains de SiC préparés selon l'exemple 2, après une étape de synthèse de la zéolithe (échantillon A), deux étapes de synthèse (échantillon B) et trois étapes de synthèse (échantillon C). A titre de comparaison, une zéolithe ZSM-5 non supportée, synthétisée à partir du même gel de synthèse et dans les même conditions que le composite, a également été étudiée. La réaction consiste à faire réagir le méthanol avec le toluène (rapport molaire 1 : 1) en présence du catalyseur selon l'invention. Elle donne un mélange des trois isomères (ortho, méta et para) du xylène. On détermine la sélectivité de la synthèse par rapport au para-xylène.

L'essai a été effectué de la façon suivante : Un mélange équimolaire méthanol/toluène est envoyé a l'aide d'une pompe HPLC avec un débit de 40 µl/min jusqu'à un « T ». Le mélange est alors vaporisé et emporté par un flux d'hélium (Air Liquide, hélium N55, débit 20 cc/min) jusqu'au réacteur. Celui-ci est constitué d'un tube de quartz en U, muni d'un fritté sur lequel sont déposés 500 mg de catalyseur. Le réacteur est situé dans un four qui assure le chauffage par effet Joule. La température est contrôlée et régulée à l'aide d'un thermocouple situé à l'extérieur du tube, à la hauteur du lit catalytique. Un septum de prélèvement placé entre la sortie du réacteur et le vent permet d'analyser les produits de réaction. Toutes les lignes sont maintenues à environ 150°C grâce à des fils chauffants calorifugés à l'aide de laine de silice tressée afin que les produits et les réactifs qui n'ont pas réagi ne se condensent pas. Les prélèvements, réalisés au niveau du septum à l'aide d'une seringue Hamilton de 10 µl, à intervalles de temps réguliers, et analysés par chromatographie en phase gazeuse, permettent de suivre l'évolution de la réaction. Le chromatographe utilisé est un modèle Varian 3800 équipé d'une colonne Chrompack CP-WAX 52CB (longueur 25 m, diamètre interne 0,53 mm) et d'un détecteur FID (Flame Ionization Detector). Un ordinateur équipé d'un logiciel fourni par Varian permet de contrôler le programme de température et de traiter le signal envoyé par le détecteur (intégration des pics).

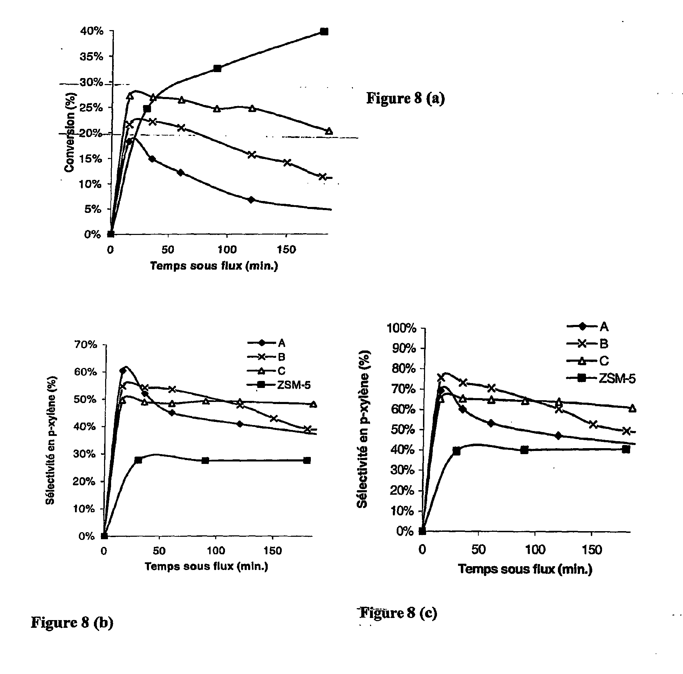

Les résultats des tests catalytiques sont donnés sur la figure 8. La figure 8a donne l'évolution de la conversion du toluène pour les composites A, B et C, ainsi que pour la ZSM-5 non supportée. On remarque que la conversion augmente avec le nombres de synthèses successives, et donc avec la quantité de ZSM-5 déposée. Dans le cas de A, la conversion chute rapidement avant de se stabiliser progressivement à 5%. Celle de B est relativement stable pendant les 60 premières minutes sous flux mais chute finalement pour atteindre une conversion de l'ordre de 11%. La conversion, dans le cas de C, reste longtemps stable aux alentours de 20 % et ne diminue que de 3 à 4% après 3 heures sous flux. L'augmentation de la conversion pour la ZSM-5 non supportée peut être attribuée à la formation de coke sur la zéolithe.

La figure 8b met en évidence des réactivités différentes pour les trois composites. Elle montre la sélectivité en para-xylène par rapport à la somme des produits de réaction. Dans le cas de A, l'importante sélectivité initiale, de l'ordre de 60%, chute rapidement pour arriver à 45% après 60 minutes sous flux. La sélectivité baisse ensuite plus lentement à approximativement 5% par heure. L'échantillon B présente une sélectivité initiale en para-xylène plus faible que A, de l'ordre de 54% mais reste stable pendant les 60 premières minutes sous flux. La sélectivité diminue ensuite à une vitesse de l'ordre de 8 à 9% par heure. La sélectivité en para-xylène dans le cas de C est stable à environ 50% sur toute la durée du test catalytique. On trouve une faible quantité d'éthyltoluène ou de triméthylbenzène.

La figure 8c montre les résultats correspondants pour la sélectivité en para-xylène par rapport au trois s isomères ortho, méta et para. Après 3 heures de réaction, la sélectivité en para-xylène par rapport à la quantité totale de xylène se stabilise à 61 % pour le catalyseur C , le taux de conversion-du toluène se stabilise à environ 20 %, le rendement en xylènes à 16 %, et la valeur WHSV (Weight Hourly Space Velocity) à 4,8 h⁻¹. Cette valeur de WHSV a été calculée sur la masse totale du composite utilisé comme catalyseur, alors que la phase active ne représentait qu'environ 15 % de cette masse totale du composite.

La ZSM-5 non supportée fait preuve d'une stabilité identique mais présente une sélectivité beaucoup plus faible que C, de l'ordre de 30%.

Le composite correspondant à l'échantillon C comporte environ 15 % de zéolithe.

Cet essai montre clairement deux avantages de l'utilisation d'un composite ZSM-5/SiC, selon l'invention par rapport au ZSM-5 massique connu : la sélectivité en para-xylène est plus élevée, et la conversion, ramenée à la masse de ZSM (calculée à partir des spectres RMN-MAS du ¹³C pour les trois composites) est meilleure pour la ZSM-5/SiC.

### Exemple 4 : Préparation et caractérisation d'un composite Bêta / SiC

Un composite comportant une zéolithe de type Bêta (type structural BEA) est synthétisé à l'aide d'un procédé hydrothermal à partir d'un gel contenant tous les réactifs nécessaires, suivant une méthodologie décrite dans l'article « Characterization of nanocrystalline zéolite Beta » par Camblor M. A. et al. dans la revue Microporous and Mesoporous Materials, vol 25, p 59 - 74 (1998). Ledit gel est composé d'eau, de silice (SiO₂ Aérosil ® 200, voir explication ci-dessous), d'aluminium métallique, et d'hydroxyde de tétraéthylammonium (N(C₂H₅)₄⁺.OH⁻, abrégé TEAOH). Sa composition molaire en oxyde est la suivante :
100 SiO₂ : 1 Al₂O₃ : 14 TEA₂O : 740 H₂O

Le mode opératoire est le suivant : 3,87g d'Aérosil 200 sont dissous dans 7,07g d'eau et 10,13g de TEAOH (solution aqueuse à 35% en masse de TEAOH) à 50°C sous agitation magnétique dans un bécher en polypropylène. Dans un même temps, dans un autre flacon en polypropylène, 0,067g d'Aluminium métallique est dissout dans 5,65g de TEAOH à 50°C sous agitation magnétique. Lorsque les solides sont passés en solution, les deux liquides sont mélangés, toujours à 50°C et sous agitation magnétique, jusqu'à obtention d'un gel qui est laissé mûrir dans les mêmes conditions de température et d'agitation, pendant 50 minutes. Ensuite, 10 g de support - suivant le cas extrudés, grains de taille comprise entre 250 et 425 µm, ou monolithe de β-SiC (du même type que celle utilisée dans l'exemple 1), préalablement calcinés à 900°C pendant 2h est ajouté au gel. Après 10 minutes de mûrissement supplémentaire, le tout est versé dans un autoclave chemisé en Téflon. L'autoclave est alors mis à l'étuve à 140°C pendant 24h. Le composite Bêta / SiC obtenu est lavé à l'eau, filtré, et soniqué dans l'éthanol pendant 10 minutes afin d'ôter à la fois le gel non transformé en zéolithe et la zéolithe faiblement attachée au support. Le structurant est décomposé en calcinant la zéolithe à 550°C pendant 12h sous air. La forme NH₄-Bêta / SiC est formée après échange cationique du composite par NH₄Cl (1M, 150ml) en solution aqueuse. Après calcination sous air à 550°C pendant 12h, la forme acide, H-Bêta / SiC est obtenue. Le pourcentage de zéolithe Bêta sur le support, déterminée par un traitement à l'acide fluorhydrique (HF 40% aqueux), est de 10% en masse.

L'obtention du composite est confirmée par différentes techniques :
- Diffraction de rayons X sur le composite Bêta / SiC préalablement broyé
- Microscopie électronique à Balayage
- RMN - RAM pour le noyau ²⁷Al
- Porosimétrie par adsorption d'azote à la température de l'azote liquide suivant la méthode BET

La silice Aérosil ® 200 utilisée pour la préparation du gel est, d'après les informations fournies par son fournisseur, la société Degussa AG, une silice hydrophile avec une surface spécifique d'environ 200 m²/g et une taille moyenne de particules de 12 nm.

### Exemple 5 : Test de l'activité catalytique du composite Bêta / SiC

L'activité catalytique du composite Bêta / SiC obtenu selon l'exemple 4 est explorée à l'aide de la réaction d'acétylation de l'anisole. Cette réaction permet la synthèse de la méthoxyacétophénone, en faisant réagir l'anhydride acétique sur l'anisole en présence du catalyseur selon l'invention. Les produits de la réaction consistent en un mélange ortho, méta, para de la méthoxyacétophénone. La sélectivité est déterminée par rapport à l'isomère para.

Un mélange d'anhydride acétique (2,8 ml, 0,03 mol) et d'anisole (7,5 ml, 0,06 mol) est chauffé à 120°C sous pression autogène dans un schlenk ( h = 21 cm ; d = 3 cm), en présence de 2g du composite Bêta/SiC. Plus précisément lors de cet essai, la nature du support est du SiC sous forme d'extrudé, l'acidité de la zéolithe est donnée par le rapport Si/Al et est égale à 50. A des temps connus, des prélèvements de 50µl de la solution sont effectués. L'analyse se fait par chromatographie en phase gaz. Le chromatographe est un modèle Varian 3400cx équipé d'une colonne HP-Pona (longueur 50 m, diamètre interne 0,5 µm) et d'un détecteur FID (Flame Ionization Detector), piloté par un ordinateur muni d'un logiciel fourni par Varian, permettant l'interprétation des signaux envoyés par le détecteur.

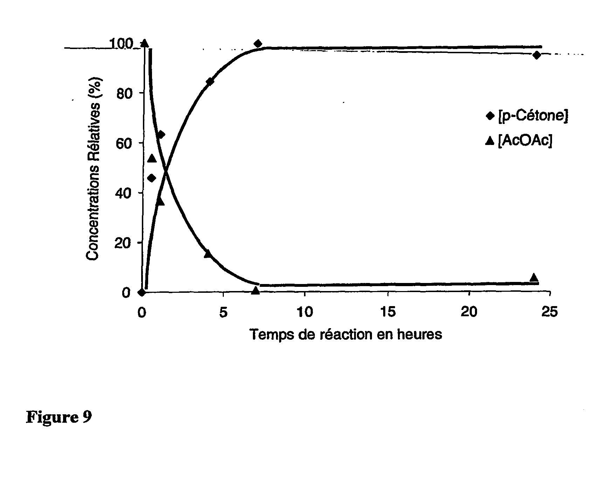

Les résultats de cet essai sont résumés sur la figure 9 qui montre l'évolution de la concentration de la p-méthoxyacétophénone, ainsi que la disparition de l'anhydride acétique en fonction du temps.

La sélectivité de forme de la zéolithe Bêta / SiC est responsable de la forte sélectivité de la réaction envers la forme disubstituée en para de la méthoxyacétophénone. Seul l'isomère para a été détecté, la concentration des deux autres isomères était en dessous du seuil de détection de l'appareil. On peut en déduire que la sélectivité envers l'isomère para était pratiquement de 100 %.

Il apparaît donc que la zéolithe Bêta supporté sur carbure de silicium β est un très bon catalyseur.

## Revendications

1. Procédé de préparation d'un composite formé d'une zéolithe déposée sur un support rigide en beta carbure de silicium (β-SiC) ayant une surface spécifique BET supérieure à 5 m²/g, dans lequel
(a) on calcine ledit support dans des conditions afin de transformer la couche superficielle d'oxyde et d'oxycarbure du support en silice, cette couche superficielle de silice ayant une épaisseur comprise entre 1 et 10 nm, mesurée par spectroscopie XPS,
(b) on met ledit support prétraité en contact avec un gel préalablement mûri,
(c) on effectue une synthèse hydrothermale de la zéolithe.

2. Procédé selon la revendication 1, **caractérisé en ce que** ledit support est une mousse en β-SiC.

3. Procédé selon la revendication 1 ou 2, **caractérisé en ce que** ledit support a une surface spécifique BET de l'ordre de 10 à 100 m²/g.

4. Procédé selon une quelconque des revendications 1 à 3, **caractérisé en ce que** ladite calcination se fait à 900°C pendant 2 heures.

5. Procédé selon une des revendications 1 à 4, **caractérisé en ce que** ladite couche de silice a une épaisseur comprise entre 1,5 et 5 nm.

6. Procédé selon une des revendications 1 à 5, **caractérisé en ce que** ledit gel contient du tétraéthoxysilane du nitrate d'aluminium nonahydraté, de l'hydroxyde de tétrapropyl ammonium et de l'eau.

7. Composite susceptible d'être obtenu par le procédé selon une quelconque des revendications 1 à 6.

8. Utilisation d'un composite susceptible d'être obtenu selon une quelconque des revendications 1 à 6 comme catalyseur ou support de catalyseur pour des réactions chimiques en milieu gazeux ou liquide.

9. Utilisation d'un composite susceptible d'être obtenu selon une quelconque des revendications 1 à 6 comme catalyseur ou support de catalyseur dans les réactions de craquage, d'alkylation, d'acylation ou d'isomérisation des hydrocarbures.

10. Utilisation d'un composite susceptible d'être obtenu selon une quelconque des revendications 1 à 6 comme catalyseur pour la méthylation du toluène.

11. Utilisation selon la revendication 10, **caractérisée en ce que** la réaction conduit à une sélectivité d'au moins 60 % de para-xylène par rapport à la quantité totale de xylène, mesurée après une durée de réaction de trois heures.

12. Utilisation d'un composite susceptible d'être obtenu selon une quelconque des revendications 1 à 6 comme catalyseur ou support de catalyseur pour la dépollution de gaz d'échappements de moteurs à combustion.

13. Utilisation d'un composite susceptible d'être obtenu selon une quelconque des revendications 1 à 6 comme catalyseur ou support de catalyseur pour l'alkylation ou l'acylation de Friedel-Crafts.

14. Utilisation selon la revendication 13 pour la synthèse de para-alkoxyacétophénones.

15. Utilisation selon la revendication 14, **caractérisée en ce que** le para-alkoxyacétophénone est le para-méthoxyacétophénone.

16. Utilisation selon une des revendications 14 ou 15, **caractérisée en ce que** la sélectivité de l'isomère para est supérieure à 90 %, et préférentiellement supérieure à 95 %.

## Claims

1. Process for preparing a composite formed by a zeolite deposited on a rigid beta silicon carbide (β-SiC) support having a specific BET surface greater than 5 m²/g, in which:
(a) said support is calcined under conditions making it possible to create, on said support, a superficial silica layer having a thickness of between 1 and 10 nm, measured by XPS spectroscopy,
(b) said pretreated support is placed in contact with a pre-ripened gel,
(c) hydrothermal synthesis of the zeolite is performed.

2. Process according to claim 1, **characterized in that** said support is a β-SiC foam.

3. Process according to claim 1 or 2, **characterized in that** said support has a specific BET surface on the order of 10 to 100 m²/g .

4. Process according to any one of claims 1 to 3, **characterized in that** said calcination is performed at 900°C for 2 hours.

5. Process according to one of claims 1 to 4, **characterized in that** said silica layer has a thickness of between 1.5 and 5 nm.

6. Process according to one of claims 1 to 6, **characterized in that** said gel contains tetraethoxysilane, nonahydrated aluminum nitrate, tetrapropylammonium hydroxide and water.

7. Composite capable of being obtained by the method according to any one of claims 1 to 6.

8. Use of a composite capable of being obtained according to any one of claims 1 to 6 as a catalyst or catalyst support for chemical reactions in a gaseous or liquid medium.

9. Use of a composite capable of being obtained according to any one of claims 1 to 6 as a catalyst or catalyst support in hydrocarbon cracking, alkylation, acylation or isomerization reactions.

10. Use of a composite capable of being obtained according to any one of claims 1 to 6 as a catalyst for methylation of toluene.

11. Use according to claim 10, **characterized in that** the reaction leads to selectivity of at least 60% para-xylene with respect to the total amount of xylene, measured after a reaction time of three hours.

12. Use of a composite capable of being obtained according to any one of claims 1 to 6 as a catalyst or catalyst support for combustion engine exhaust gas pollution removal.

13. Use of a composite capable of being obtained according to any one of claims 1 to 6 as a catalyst or catalyst support for Friedel-Crafts acylation or alkylation.

14. Use according to claims 13 for para-alkloxyacetophenone synthesis.

15. Use according to claim 14, **characterized in that** the para-alkoxyacetophenone is para-methoxyacetophenone.

16. Use according to one of claims 14 or 15, **characterized in that** the selectivity of the para isomer is greater than 90% and preferably greater than 95%.

## Patentansprüche

1. Verfahren zur Herstellung eines Verbundmaterials, gebildet aus einem Zeolith, abgeschieden auf einem starren Träger aus Beta-Siliziumcarbid (β-SiC) mit einer spezifischen BET-Oberfläche von mehr als 5 m²/g, wobei
(a) der Träger unter Bedingungen kalziniert wird, die es ermöglichen, auf dem Träger eine Oberflächenschicht aus Siliziumoxid zu bilden, die eine Dicke zwischen 1 und 10 nm aufweist, gemessen durch XPS-Spektroskopie
(b) der vorbehandelte Träger in Kontakt mit einem zuvor ausgereiften Gel gebracht wird,
(c) eine hydrothermale Synthese des Zeoliths durchgeführt wird.

2. Verfahren nach Anspruch 1, **dadurch gekennzeichnet, dass** der Träger ein Schaum aus β-SiC ist.

3. Verfahren nach Anspruch 1 oder 2, **dadurch gekennzeichnet, dass** der Träger eine spezifische BET-Oberfläche im Bereich von 10 bis 100 m²/g aufweist.

4. Verfahren nach einem der Ansprüche 1 bis 3, **dadurch gekennzeichnet, dass** die Kalzinierung bei 900 °C während 2 Stunden erfolgt.

5. Verfahren nach einem der Ansprüche 1 bis 4, **dadurch gekennzeichnet, dass** die Schicht aus Siliziumoxid eine Dicke zwischen 1,5 und 5 mm aufweist.

6. Verfahren nach einem der Ansprüche 1 bis 5, **dadurch gekennzeichnet, dass** das Gel Tetraethoxysilan, Aluminiumnitratnonahydrat, Tetrapropylammoniumhydroxid und Wasser enthält.

7. Verbundmaterial, das durch das Verfahren nach einem der Ansprüche 1 bis 6 erhalten werden kann.

8. Verwendung eines Verbundmaterials, das nach einem der Ansprüche 1 bis 6 erhalten werden kann, als Katalysator oder Katalysatorträger für chemische Reaktionen in gasförmigem oder flüssigem Medium.

9. Verwendung eines Verbundmaterials, das nach einem der Ansprüche 1 bis 6 erhalten werden kann, als Katalysator oder Katalysatorträger bei den Krack-, Alkylierungs-, Acylierungs- oder Isomerisierungsreaktionen der Kohlenwasserstoffe.

10. Verwendung eines Verbundmaterials, das nach einem der Ansprüche 1 bis 6 erhalten werden kann, als Katalysator für die Methylierung von Toluen.

11. Verwendung nach Anspruch 10, **dadurch gekennzeichnet, dass** die Reaktion zu einer Selektivität von mindestens 60% Paraxylen bezüglich der Gesamtmenge von Xylen, gemessen nach einer Reaktionsdauer von drei Stunden, führt.

12. Verwendung eines Verbundmaterials, das nach einem der Ansprüche 1 bis 6 erhalten werden kann, als Katalysator oder Katalysatorträger für die Reinigung von Abgasen von Verbrennungsmotoren.

13. Verwendung eines Verbundmaterials, das nach einem der Ansprüche 1 bis 6 erhalten werden kann, als Katalysator für die Friedel-Crafts-Alkylierung oder Acylierung.

14. Verwendung nach Anspruch 13 für die Synthese von Paraalkoxyacetophenonen.

15. Verwendung nach Anspruch 14, **dadurch gekennzeichnet, dass** das Paraalkoxyacetophenon das Paramethoxyacetophenon ist.

16. Verwendung nach einem der Ansprüche 14 oder 15, **dadurch gekennzeichnet, dass** die Selektivität des Isomers Para höher als 90% ist, vorzugsweise höher als 95%.
